(19) Europäisches Patentamt
European Patent Office
Office européen des brevets

(11) **EP 3 283 609 B1**

(12) **EUROPEAN PATENT SPECIFICATION**

(45) Date of publication and mention
of the grant of the patent:
**03.04.2019 Bulletin 2019/14**

(21) Application number: **16717305.3**

(22) Date of filing: **08.04.2016**

(51) Int Cl.:
***C12C 7/14*** *(2006.01)*

(86) International application number:
**PCT/EP2016/057787**

(87) International publication number:
**WO 2016/166029 (20.10.2016 Gazette 2016/42)**

(54) **METHOD OF MONITORING EXTRACT CONTENT OF SPENT GRAINS IN A BREWING PROCESS**

VERFAHREN ZUR ÜBERWACHUNG DES EXTRAKTGEHALTS VON TREBER IN EINEM BRAUVERFAHREN

PROCÉDÉ DE SURVEILLANCE DU CONTENU D'UN EXTRAIT DE DRÊCHE DE BRASSERIE DANS UN PROCESSUS DE BRASSAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.04.2015 EP 15163846**

(43) Date of publication of application:
**21.02.2018 Bulletin 2018/08**

(73) Proprietor: **Heineken Supply Chain B.V.**
**1017 ZD Amsterdam (NL)**

(72) Inventors:
• **MULDER, Hendrikus**
**1911 HW Uitgeest (NL)**
• **VAN RIJN, Cornelis**
**2221 LP Katwijk (NL)**
• **BRABANDER, Edwin Johannes**
**2721 GB Zoetermeer (NL)**

(74) Representative: **Nederlandsch Octrooibureau**
**P.O. Box 29720**
**2502 LS The Hague (NL)**

(56) References cited:
**EP-A1- 1 662 915      WO-A1-2004/011591**
**WO-A1-2007/136257      DE-A1-102010 049 591**
**US-A1- 2010 310 715**

**Description**

**TECHNICAL FIELD OF THE INVENTION**

The present invention relates to a method of monitoring extract content of spent grains in a brewing process. More particularly, the invention provides a method of monitoring extract content of spent grains in a brewing process, said method comprising:

- separating a saccharified mash into clear wort and spent grains; and
- transporting a stream of the spent grains across a refractometer to obtain a sequence of time-resolved refractive index measurements.

**BACKGROUND OF THE INVENTION**

Brewing is the production of beer by steeping a starch source (e.g. cereal grains) in water and fermenting the resulting sweet liquid with yeast. The brewing process typically includes the successive steps of malting, mashing, lautering, boiling, trub separation, cooling, fermenting, conditioning, filtering, and packaging.

Malting is the process of converting barley or other cereal grains into "malt". First, the grain is combined with water and allowed to soak for approximately 40 hours (steeping). Next, the grain is spread out on the floor of the germination room for around 5 days (germination). In the last step of malting the germinated malt goes through a high temperature drying in a kiln; with gradual temperature increase over several hours (kilning). When the kilning is complete, the grains are termed "malt", and they are milled or crushed to break apart the kernels and expose the cotyledon, which contains the majority of the carbohydrates and sugars; this makes it easier to extract the sugars during mashing.

Barley is the most commonly malted grain, in part because of its high diastatic power or enzyme content, though wheat, rye, oats and rice are also used. Also very important is the retention of the grain's husk, even after threshing, unlike the bare seeds of threshed wheat or rye. This protects the growing acrospire (developing plant embryo) from damage during malting and it allows the mash of converted grain to create a filter bed during lautering. Malt is often divided into two categories by brewers: base malts and specialty malts. Base malts have enough diastatic power to convert their own starch and usually that of some amount of starch from unmalted grain, called adjuncts. Specialty malts have little diastatic power; they are used to provide flavour, colour, or "body" to the finished beer.

In the mashing stage of the brewing process a mix of milled grain (typically malted barley with supplementary grains such as corn, sorghum, rye or wheat), known as the "grain bill", and water, known as "liquor", and heating this mixture in a vessel called a "mash tun". Mashing is a form of steeping that allows the enzymes in the malt to break down the starch in the grain into sugars (saccharification), typically maltose, to create a sugar rich liquid called "wort". There are two main methods - infusion mashing, in which the grains are heated in one vessel; and decoction mashing, in which a proportion of the grains are boiled and then returned to the mash, raising the temperature.

The result of the mashing process is a sugar rich liquid (saccharified mash), which is separated by filtration or centrifugation into wort and spent grains. Prior to this separation, the temperature of the saccharified mash may be raised to deactivate enzymes. Additional water may be sprinkled on the grains during separation to extract additional sugars (sparging).

The wort is moved into a large tank known as a "copper" or kettle where it is boiled with hops and sometimes other ingredients such as herbs or sugars. At the end of the boil, the hopped wort settles to clarify in a vessel called a "whirlpool", where the more solid particles in the wort are separated out. After the whirlpool, the wort is rapidly cooled via a heat exchanger to a temperature where yeast can be added. The cooled wort goes into a fermentation tank to which yeast is added, or "pitched" to start the fermenting process in which sugars are converted into alcohol, carbon dioxide and other components. When the fermentation is complete. the beer may be transferred into a conditioning tank to "condition" the beer, a process in which the beer ages, the flavour becomes smoother, and flavours that are unwanted dissipate. After conditioning for a week to several months, the beer may be filtered and force carbonated for bottling or fined in the cask.

The separation of saccharified mash into wort and spent grains is an important step in the brewing process as it largely determines the so called "brewhouse efficiency" of the brewing process. The brewhouse efficiency is the percentage of the potential extract in the grain (malt and adjuncts) that actually ends up in the wort that is subjected to yeast fermentation. Brewhouse efficiency is mainly determined by the mashing efficiency (efficiency with which starch and other raw materials constituents (e.g. protein) is converted into extract (fermentable sugars, non-fermentable sugars, proteins, lipids and other nutrients like amino acids, and minerals) and the lautering efficiency (efficiency with which extract is extracted from the saccharified mash into the wort). For industrial brewers it is crucial to know the brewhouse efficiency in order to be able to minimize extract losses.

The efficiency with which saccharified mash is separated into wort and spent grains is usually determined by brewers as "extract loss". Extract loss is commonly calculated using the following equation:

$$\text{Extract loss (\%)} = 100\% \times ((M_m \times Y_m) - (M_w \times C_w)) / (M_m \times Y_m)$$

wherein:

- $M_m$ = total mass (kg) of grain (malt and adjuncts)
- $Y_m$ = extract yield (kg extract in saccharified mash / kg grain)
- $M_w$ = total mass of wort (kg)
- $C_w$ = concentration of extract in the wort (kg/kg)

A drawback of this method of calculating extract loss lies in the fact that the accuracy of the calculated value is low. This is because the extract loss is determined by subtracting two large numbers to obtain a relatively small difference and because each to these large numbers has a relatively large standard deviation.

Dissolution of sucrose and other sugars in water changes its refractive index and the extent to which it rotates the plane of linearly polarized light. The refractive index, nD, for sugar solutions is a measure of the sugar content and usually is converted directly into °Brix (or °Bx). A refractometer, i.e. a device for the measurement of an index of refraction, can be used to determine the sugar content aqueous sugar solutions. In brewing, a refractometer is used to measure the concentration of extract (sugars and other dissolved components) in wort before fermentation.

CA 1,329,563 describes a method for monitoring and controlling the extractable solids concentration of wort in a brewing process, including the steps of:

a) introducing a mash including ground malt and water into a lautertun having a least two concentric extraction zones, there being extraction pipes for extracting wort from each of said zones in said lautertun;
b) extracting saccharified wort from said lautertun, via said extraction pipes from said zones, said pipes leading to a wort kettle, and adding sparge water to said lautertun as said wort is extracted to extract further solids from said ground malt;
c) monitoring the extractable solids in the extraction pipe from each said zone by sequentially passing samples of wort from each said pipe via sampling lines, through a densimeter, to obtain density readings of the wort from each said zone; and
d) adjusting the flow of wort from the extraction pipe from each said zone in response to said density readings by automatic flow adjustment means in said extraction pipes to obtain a flow of wort in each said extraction pipe having approximately the same extractable solids concentration.

This method is said to obtain a much greater yield of sugar and other extractable solids from mash in the lautering process. It is further stated that with this method a final solids content of 1° Plato can be obtained on a fairly consistent basis.

WO 2005/027665 describes a method for enhancing the stability of a beverage, comprising addition of *Labiatae* herb extracts or constituents of *Labiatae* herbs. The examples of the European patent application describe an embodiment of such a method in which mash was separated in a Lauter Tun. After removal of a part of the wort ("Vorlauf"), sparge water containing added rosemary extract was sprayed over the top of the spend grain. The last runnings were terminated at 3 °Brix measured by refractive index.

## SUMMARY OF THE INVENTION

The inventors have found a new way to determine extract loss that is much more accurate than the conventional method and that can easily be implemented in industrial breweries. This new method of determining extract loss relies on the use of a refractometer to directly determine the extract content of spent grains. Knowing the extract content of spent grains, extract loss can be determined in a very simple and accurate way by means of the following equation:

$$\text{Extract loss (\%)} = 100\% \times M_{sg} \times (1 - C_{solids}) \times C_{refr} / (M_m \times Y)$$

wherein:

- $M_{sg}$ = total mass of spent grain
- $C_{solids}$ = solids content of spent grains (kg/kg)

- $C_{ref}$ = concentration of extract determined by refractometer (kg/kg)
- $M_m$ = the total mass (kg) of grain (malt and adjuncts)
- Y = extract yield (kg extract in saccharified mash / kg grain)

The inventors have unexpectedly discovered that a refractometer can be used to determine the extract content of spent grains, despite the high solids content and semi-solid nature of spent grains. By using a refractometer to continuously measure the extract content of a stream of the spent grains that is removed after separation of saccharified mash into wort and spent grains, the total amount of extract in the removed spent grains can be determined accurately. In other words, the use of a refractometer in this fashion enables direct determination of the amount of extract that is lost in a brewing process via the spent grains.

The present invention provides a method of monitoring extract content of spent grains in a brewing process, said method :

- separating a saccharified mash into clear wort and spent grains; and
- transporting a stream of the spent grains across a refractometer to obtain a sequence of time-resolved refractive index measurements.

The present method may advantageously be applied in brewing processes that are operated in a batch-wise, continuous or semi-continuous fashion. In a batch-wise operation of the present method, the spent grains that remain after removal of the clear wort may be transported across the refractometer and the refractive index measurements can be used to determine overall extract loss. In a continuous operation of the present method, the stream of spent grains that is continuously generated in the mash separation stage can be transported across the refractometer and the refractometer index measurement can be used to monitor fluctuations in extract content.

The present invention further provides an apparatus for separating saccharified mash into clear wort and spent grains, said apparatus comprising:

- a solid-liquid separation device comprising one or more separators selected from filters, centrifuges, decanters, presses and combinations thereof, said solid-liquid separation device having an inlet for saccharified mash; an outlet for clear wort; and an outlet for spent grains; and
- an inline refractometer disposed in the outlet for spent grains or downstream of said outlet of spent grains.

## DETAILED DESCRIPTION OF THE INVENTION

Accordingly, a first aspect of the present invention relates to a method of monitoring extract content of spent grains in a brewing process, said method comprising:

- separating a saccharified mash into clear wort and spent grains; and
- transporting a stream of the spent grains across a refractometer to obtain a sequence of time-resolved refractive index measurements.

The term "extract" as used herein in relation to spent grain, unless indicated otherwise, refers to the solute that is contained in the spent grain, i.e. the dissolved components present in the water that is contained in the spent grain. Typically, sugars represent the major part of the extract.

The term "refractometer" as used herein refers to a device that is capable of determining the refractive index of a material through a sensor that is in direct contact with said material.

The term "time-resolved" as used herein denotes that a sequence of measurements (spectrum) is obtained at a series of time intervals.

In the present method a sequence of refractive index measurements is generated. Thus, fluctuations in extract content of the spent grains can be detected and quantified. In a batch-method it is important to monitor such fluctuations as otherwise the extract content of the separated batch of spent grains may not be determined accurately. In a continuous method, it is important to monitor fluctuation in extract content because this enables adjustment of upstream process conditions in order to ensure that a wort of constant quality is produced. In order to ensure that fluctuation in extract content are adequately monitored, it is preferred to obtain the sequence of refractive index measurements with a frequency of at least 1 $min^{-1}$, more preferably with a frequency of at least 3 $min^{-1}$ and most preferably with a frequency of at least 10 $min^{-1}$.

The measurement of the refractive index of spent grains is not only affected by extractcontent of the spent grains, but also by the temperature of the spent grains. Thus, fluctuations in temperature may have an impact on the accuracy of the measured extract content. According to a preferred embodiment of the present method, the spent grains are transported across a temperature sensor to generate a sequence of time-resolved temperature measurements. Advantageously, the temperature sensor and the refractometer are an integral part of a single device. Refractometers that comprise a built-in temperature sensor and that automatically correct the measured refractive index for temperature deviations, are commercially available.

Preferably, the temperature sensor generates the sequence of temperature measurements with a frequency of at least 0.1 min⁻¹, more preferably with a frequency of at least 0.5 min⁻¹ and most preferably with a frequency of at least 3 min⁻¹.

The volume of spent grains is preferably transported across the refractometer by means of a screw conveyor. The use of a screw conveyor offers the advantage that the both the flow rate and the density of the spent grains can be kept relatively constant. The refractometer may be located downstream of the screw conveyor. It is also possible to locate the refractometer within the screw conveyor.

The present method can be operated in a batch-wise, continuous or semi-continuous fashion.

One embodiment of the present method is a batch method or semi-continuous method comprising:

- separating the saccharified mash into clear wort and spent grains;
- removing a volume of spent grains;

wherein the volume of spent grains is transported as a stream of spent grains across a refractometer to obtain the sequence of time-resolved refractive index measurements, and wherein the extract content of the volume of spent grains is determined using said sequence of refractive index measurements. The extract content of the volume of spent grains can be determined by integrating the sequence of refractive index measurements over time. Preferably, erroneous measurements (outliers) are removed from the dataset before carrying out the integration.

In a preferred embodiment of this batch-method the extract content of the volume of spent grains is determined using the sequence of refractive index measurements and the sequence of temperature measurements.

According to another preferred embodiment of the batch-method, the extract content of the volume of spent grains is determined taking into account fluctuations in the flow rate of the stream of spent grains.

Another embodiment of the present method is a continuous method that comprises continuously separating the saccharified mash into a stream of clear wort and a stream of spent grains; wherein at least a fraction of the stream of spent grains is continuously transported across a refractometer to generate the sequence of refractive index measurements.

In a preferred embodiment of this continuous method the refractive index measurements are compared with one or more preset threshold values and the result of the comparison is displayed and/or is used to adjust separation conditions employed during the continuous mash separation and/or to adjust mashing conditions employed in a continuous preparation of the mash. Preferably, erroneous measurements (outliers) are filtered out in order to avoid incorrect adjustments.

According to another advantageous embodiment of the continuous method the refractive index measurements are compared with a target value and the result of the comparison is displayed and/or is used to adjust the separation conditions employed during continuous mash separation and/or to adjust the mashing conditions employed in continuous preparation of the mash.

Typically, in the present method the volume of spent grains is transported across the refractometer during a time period of at least 1 minute to generate the sequence of refractive index measurements. More preferably, said time period is at least 5 minutes, most preferably at least 10 minutes.

In a particularly preferred embodiment of the present method the spent grains are transferred into a spent grains tank, and the spent grains is subsequently removed from this spent grains tank and transported across the refractometer to generate the sequence of refractive index measurements.

The present method does not require that the spent grains are transported across the refractometer at a constant flow rate, especially not when the flow rate is continuously monitored. According to a preferred embodiment, the spent grains are transported across the refractometer at a constant flow rate as this aids the accurate determination of the extract content of the spent grains. A flow rate is deemed to be constant if the relative standard deviation does not exceed 5%.

The Brix concentration of the spent grains typically does not exceed 20 °Bx, more preferably does not exceed 15 °Bx, and most preferably does not exceed 10 °Bx.

The solids content of the spent grains typically is in the range of 8-50 wt.%. More preferably, the solids content of the spent grains is in the range of 10-40 wt.% and most preferably in the range of 12-35 wt.%.

Another aspect of the invention relates to an apparatus for separating saccharified mash into clear wort and spent grains, said apparatus comprising:

- a solid-liquid separation device comprising one or more separators selected from filters, centrifuges, decanters, presses and combinations thereof, said solid-liquid separation device having an inlet for saccharified mash; an outlet for clear wort; and an outlet for spent grains; and

- an inline refractometer disposed in the outlet for spent grains or downstream of said outlet of spent grains.

The apparatus is preferably configured for carrying out a method of monitoring extract content of spent grains as described herein.

The apparatus of the present invention may suitable contain devices for preparing saccharified mash, located upstream of the solid-liquid separation device. These devices typically include:

- a size reduction device for milling or grinding grain;
- one or more mashing vessels for preparing a mash; and
- one or more mash saccharification vessels.

According to a preferred embodiment, the solid-liquid separation device further contains an inlet for sparging water. Sparging water may suitably be used to wash extract out of the spent grains and to thereby reduce extract loss. The washing liquid containing extract can suitably be combined with the rest of the wort.

The present apparatus preferably contains an inline temperature sensor disposed in the outlet for spent grains or downstream of said outlet of spent grains. As explained herein before, such a temperature sensor may suitably be used to monitor the temperature of the spent grains while is transported across this temperature sensor.

In another preferred embodiment, the apparatus contains a spent grains tank that is connected to the outlet for spent grains, said spent grains tank comprising an outlet for spent grains and a screw conveyor for removing spent grains from said spent grains tank through the outlet for spent grains. The refractomer may be disposed downstream of the screw conveyor or, alternatively, it may be disposed in the screw conveyor.

The solid-liquid separation device is preferably selected from a lautertun, a mash filter and a decanter centrifuge.

In a further preferred embodiment, the apparatus of the present invention is designed for use in a continuous brewing process and comprises computing means that is communicatively coupled to the inline refractometer and to the solid-liquid separation device, said computing means being configured to adjust the processing conditions in the solid-liquid separation device, the size reduction device, the mashing vessel and/or the saccharification vessel in response to variations in the input received from the inline refractometer. Here "communicatively coupled" means that the computing device is configured to receive output signals from the inline refractometer and that it is configured to generate and send output signals to separation device.

In an advantageous embodiment, the computing means is configured to adjust the amount of sparging water that is employed in the solid-liquid separation device in response to the input received from the inline refractometer.

In another embodiment, the computing means is configured to adjust the level of size reduction achieved during milling or grinding of grain in the size reduction device in response to the input received from the inline refractometer. In a further embodiment, the computing means is configured to adjust the heating rate(s), residence time(s) of the mash and/or the temperature(s) of the mash in the one or more mashing vessels in response to the input received from the inline refractometer. In yet another embodiment, the computing means is configured to adjust the heating rate(s), the residence time(s) of the mash and/or the temperature(s) of the mash in the one or more saccharification vessels in response to the input received from the inline refractometer.

According to yet another preferred embodiment, the apparatus for use in a batch or semi-continuous brewing process and comprises computing means that is communicatively coupled to the inline refractometer, said computing means being configured to receive a sequence of refractive index measurements from the inline refractometer and to calculate a parameter that is indicative of the average extract content or the total extract content from said sequence of measurements.

The invention is further illustrated by means of the following non-limiting examples.

## EXAMPLES

Statistical assessment

A statistical assessment is made of the accuracy of a method of determining extract loss according to the present invention and the accuracy of a conventional method. The parameters for both methods are based on practical experience.

Determination of extract loss by conventional method:

$$\text{Extract loss (\%)} = 100\% \times ((M_m \times Y_m) - (M_w \times C_w)) / (M_m \times Y_m)$$

wherein:

- $M_m$ = total mass (kg) of grain (malt and adjuncts)
- $Y_m$ = extract yield (kg extract in saccharified mash / kg grain)
- $M_w$ = total mass of wort (kg)
- $C_w$ =concentration of extract in the wort (kg/kg)

Determination of extract loss by present method:

$$\text{Extract loss (\%)} = 100\% \text{ x } M_{sg} \text{ x } (1\text{-}C_{solids}) \text{ x } C_{sg} / (M_m \text{ x } Y_m)$$

wherein:

- $M_{sg}$ = total mass of spent grain
- $C_{solids}$ = solids content of spent grains (kg/kg)
- $C_{sg}$ = concentration of extract in spent grains determined by refractometer (kg/kg)
- $M_m$ = the total mass (kg) of grain (malt and adjuncts)
- $Y_m$ = extract yield (kg extract in saccharified mash / kg grain)

This assessment takes into account the effect of propagation of uncertainty. Uncertainty is usually defined by the absolute error $\Delta x$, or the relative error $(\Delta x)/x$, which is usually written as a percentage. Most commonly the error on a quantity, $\Delta x$, is given as the standard deviation, $\sigma$.

Two calculation rules are given to calculate the propagated standard deviations (Ku, H. H. (1969). Notes on the use of propagation of error formulas. Precision Measurement and Calibration, NBS SP 3D0, 1, 331-341.).

*Additions & Subtractions*

Consider the case where the calculation is of the form

$$f(X,Y) = X - Y \text{ or } f(X,Y) = X + Y$$

Where the measured quantities with their associated standard deviations are $X \pm \sigma_x$ and $Y \pm \sigma_y$, the standard deviation of $f(X,Y)$ is given by

$$\sigma_f = \sqrt{\sigma_x{}^2 + \sigma_y{}^2}$$

*Multiplications & Divisions*

Consider the case where the calculation is of the form

$$f(X,Y) = X/Y \text{ or } f(X,Y) = XY$$

Where the measured quantities with their associated standard deviations are $X \pm \sigma_x$ and $Y \pm \sigma_y$, the standard deviation of $f(X,Y)$ is given by

$$\sigma_f = f(X,Y)\sqrt{(\frac{\sigma_x}{X})^2 + (\frac{\sigma_y}{Y})^2}$$

In the following table the results of the statistical assessment of the accuracy of the method according to the present invention and the conventional method are summarized.

**Table 1**

| Parameter | symbol | units | value | stdev | relative stdev |
|---|---|---|---|---|---|
| **Input** |  |  |  |  | **(%)** |
| mass of malt | $M_m$ | kg | 100 | 0.5 | 0.5 |
| yield of extract | $Y_m$ | kg/kg | 0.77 | 0.002618 | 0.34 |
| **Output** |  |  |  |  |  |
| wort mass | $M_w$ | kg | 500 | 5 | 1.0 |
| concentration extract | $C_w$ | kg/kg | 0.152 | 0.000228 | 0.15 |
| **Losses (in spent grains)** |  |  |  |  |  |
| spent grains mass | $M_{sg}$ | kg | 75 | 3.75 | 5 |
| solids content | $C_{solids}$ | kg/kg | 0.21 | 0.0059 | 2.8 |
| concentration extract measured in spent grain | $C_{sg}$ | kg/kg | 0.0168 | 0.0003 | 2.0 |
| **Extract loss calculation** |  |  |  |  |  |
| *Conventional method* |  |  |  |  |  |
| extract in | $E_i$ | kg | 77.0 | 0.47 | 0.6 |
| extract out | $C_o$ | kg | 76.0 | 0.77 | 1.0 |
| mass of extract lost | $\Box E$ | kg | 1.00 | 0.90 | 89.9 |
| extract loss | EL | % | 1.3 | 1.17 | 89.9 |
| *Method of the invention* |  |  |  |  |  |
| extract in | $E_i$ | kg | 77.0 | 0.47 | 0.6 |
| mass of extract lost | $C_o$ | kg | 1.00 | 0.06 | 6.1 |
| extract loss | EL | % | 1.3 | 0.08 | 6.1 |

As shown in Table 1, the relative standard deviation of the extract loss content determined by the conventional method is 89.9%, whereas the relative standard deviation of the extract loss determined by the method according to the present invention is only 6.1%.

Even if the standard deviations of the solids content and the mass of the spent grains both increase to ±1 %, the accuracy of the method of the present invention is still more than 9 to 10 times more accurate compared to the conventional method.

Example 1

Spent grains obtained from a lautering process were discharged into a spent grains buffer tank, located underneath the lautertun. The buffer tank contained a falling chute that directs the spent grains to a screw conveyor located in the bottom of the tank. The screw conveyor can be used to pneumatically convey spent grains through an tank outlet to a wet spent grains silo.

An ATAGO inline refractometer (CM-780N) had been installed in the tank outlet of the spentgrains buffer tank. This refractometer contained a temperature sensor that enabled automatic temperature compensation in the temperature range of 5-100°C. The sampling rate of the Brix refractometer was set to one measurement per second.

The sensor surfaces of the refractometer and temperature sensor were aligned with the internal surface of the outlet in order to ensure that the spent grains on these sensors are continuously refreshed during the emptying of buffer tank. The inline refractometer and temperature sensor were connected to a computer to which recorded the Brix and temperature readings every second.

After the buffer tank had been filled with spent grains from the lautering process, the spent grains were removed from the buffer tank and transported by the screw conveyor past the inline refractometer and temperature sensor. The pressure applied by the screw conveyor did not exceed 1 bar. The solids content of the spent grains was approximately 21 wt.%.

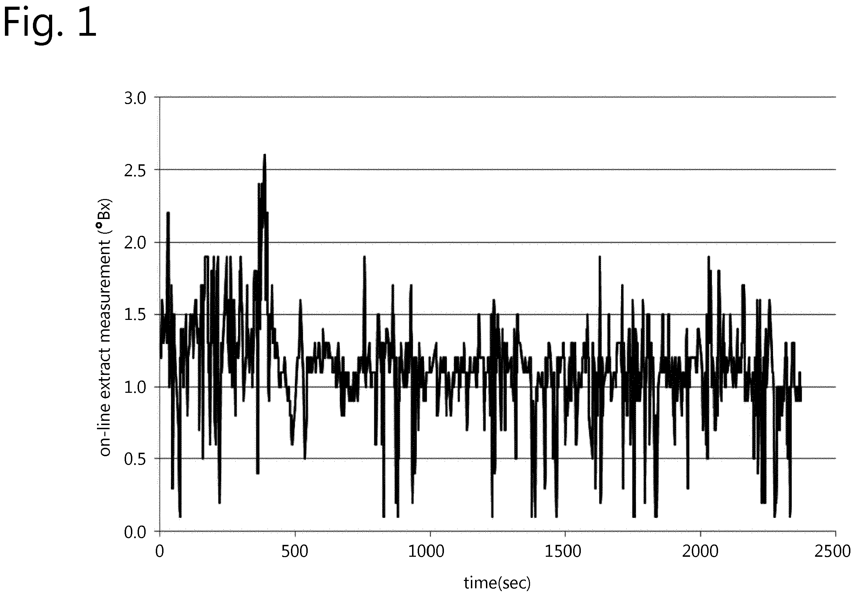

The results of the time-resolved refractory index and temperature measurements are shown in Figure 1.

These measurements and the data shown in Table 2 were used to calculate extract loss and extract loss content. The results of these calculations are also shown in Table 2.

**Table 2**

| Total mass of grain used in mash | 17,377 kg |
|---|---|
| Extract yield in saccharified mash | 76.0 wt.% |
| Total mass of spent grain | 19,384 kg |
| Solids content of spent grains | 21.5 wt.% |
| Calculated °Brix of the spent grains | 1.1 ° |
| Extract loss (kg) [1] | 167.4 kg |
| Extract loss (wt.%) | 1.27 wt.% |
| [1] It is assumed that at a concentration of 1.1 °Bx, the extract content expressed in wt.% (°P) is identical to the Brix concentration, i.e. 1.1. wt.% | |

**Claims**

1. A method of monitoring extract content of spent grains in a brewing process, said method comprising:

   • separating a saccharified mash into clear wort and spent grains; and
   • transporting a stream of the spent grains across a refractometer to obtain a sequence of time-resolved refractive index measurements.

2. Method according to claim 1, wherein the refractometer generates the sequence of refractive index measurements with a frequency of at least $0.1 \text{ s}^{-1}$, preferably with a frequency of at least $0.2 \text{ s}^{-1}$.

3. Method according to any one of the preceding claims, wherein the stream of the spent grains is also transported across a temperature sensor to generate a sequence of time-resolved temperature measurements.

4. Method according to claim 3, wherein the temperature sensor generates the sequence of temperature measurements with a frequency of at least $0.01 \text{ s}^{-1}$, preferably with a frequency of at least $0.05 \text{ s}^{-1}$.

5. Method according to any one of the preceding claims, wherein the method comprises:

   • separating the saccharified mash into clear wort and spent grains;
   • removing a volume of spent grains;

   wherein the volume of spent grains is transported across a refractometer as a stream of spent grains to obtain the sequence of time-resolved refractive index measurements, and wherein the extract content of the volume of spent grains is determined using said sequence of refractive index measurements.

6. Method according to claims 3 and 5, wherein the extract content of the volume of spent grains is determined using the sequence of refractive index measurements and the sequence of temperature measurements.

7. Method according to claim 5 or 6, wherein the extract content of the volume of spent grains is determined taking into account fluctuations in the flow rate of the stream of spent grains.

8. Method according to any one of claims 1-4, wherein the method comprises continuously separating the saccharified mash into a stream of clear wort and a stream of spent grains; wherein at least a fraction of the stream of spent grains is continuously transported across a refractometer to obtain the sequence of time-resolved refractive index measurements.

9. Method according to claim 8, wherein the refractive index measurements are compared with one or more preset threshold values and the result of the comparison is displayed and/or is used to adjust the separation conditions employed during the continuous mash separation and/or to adjust the mashing conditions employed in a continuous preparation of the mash.

10. Method according to claim 8 or 9, wherein the refractive index measurements are compared with a target value and wherein the result of the comparison is displayed and/or is used to adjust separation conditions employed during the continuous mash separation and/or to adjust mashing conditions employed in continuous preparation of the mash.

11. Method according to any one of the preceding claims, wherein the spent grains is transferred into a spent grains tank, and wherein spent grains is removed from the spent grains tank and transported across the refractometer to obtain the sequence of time-resolved refractive index measurements.

12. An apparatus for separating saccharified mash into clear wort and spent grains, said apparatus comprising:

   • a solid-liquid separation device comprising one or more separators selected from filters, centrifuges, decanters, presses and combinations thereof, said solid-liquid separation device having an inlet for saccharified mash; an outlet for clear wort; and an outlet for spent grains; and
   • an inline refractometer disposed in the outlet for spent grains or downstream of said outlet of spent grains.

13. Apparatus according to claim 12, wherein the apparatus contains an inline temperature sensor disposed in the outlet for spent grains or downstream of said outlet of spent grains.

14. Apparatus according to any one of claims 12 or 13, wherein the apparatus contains a spent grains tank that is connected to the outlet for spent grains, said spent grains tank comprising an outlet for spent grains and a screw conveyor for removing spent grains from said spent grains tank through the outlet for spent grains.

15. Apparatus according to any one of claims 12-14, wherein the solid-liquid separation device is selected from a lautertun, a mash filter and a decanter centrifuge.

**Patentansprüche**

1. Verfahren zur Überwachung eines Extraktanteils von Malztreber in einem Brauvorgang, wobei das Verfahren umfasst:

   • Trennen einer verzuckerten Maische in klare Stammwürze und Malztreber; und
   • Führen eines Stroms aus Malztreber über ein Refraktometer derart, dass eine Sequenz aus zeitaufgelösten Messwerten des Brechungsindex erhalten wird.

2. Verfahren nach Anspruch 1, wobei das Refraktometer die Sequenz aus Messwerten des Brechungsindex mit einer Frequenz von mindestens $0,1 \ s^{-1}$, vorzugsweise mit einer Frequenz von mindestens $0,2 \ s^{-1}$, erzeugt.

3. Verfahren nach einem der vorhergehenden Ansprüche, wobei der Strom aus Malztreber auch über einen Temperatursensor geführt wird, so dass eine Sequenz aus zeitaufgelösten Temperaturmesswerten erzeugt wird.

4. Verfahren nach Anspruch 3, wobei der Temperatursensor die Sequenz aus Temperaturmesswerten mit einer Frequenz von mindestens $0,01 \ s^{-1}$, vorzugsweise mit einer Frequenz von mindestens $0,05 \ s^{-1}$, erzeugt.

5. Verfahren nach einem der vorhergehenden Ansprüche, wobei das Verfahren umfasst:

   • Trennen der verzuckerten Maische in klare Stammwürze und Malztreber;
   • Entfernen eines Volumens des Malztrebers;

   wobei das Volumen des Malztrebers über ein Refraktometer als ein Strom aus Malztreber so geführt wird, dass die Sequenz aus zeitaufgelösten Messwerten des Brechungsindex erhalten wird, und wobei der Extraktanteil des Volumens des Malztrebers unter Anwendung der Sequenz aus Messwerten des Brechungsindex ermittelt wird.

6. Verfahren nach Anspruch 3 und 5, wobei der Extraktanteil des Volumens des Malztrebers unter Anwendung der Sequenz aus Messwerten des Brechungsindex und der Sequenz aus Temperaturmesswerten ermittelt wird.

7. Verfahren nach Anspruch 5 oder 6, wobei der Extraktanteil des Volumens des Malztrebers unter Berücksichtigung von Schwankungen in der Durchflussrate des Stroms aus Malztreber ermittelt wird.

8. Verfahren nach einem der Ansprüche 1 - 4, wobei das Verfahren umfasst: kontinuierliches Trennen der verzuckerten Maische in einem Strom aus klarer Stammwürze und einen Strom aus Malztreber; wobei zumindest ein Teil des Stroms aus Malztreber kontinuierlich über ein Refraktometer geführt wird, so dass die Sequenz aus zeitaufgelösten Messwerten des Brechungsindex erhalten wird.

9. Verfahren nach Anspruch 8, wobei die Messwerte des Brechungsindex mit einem oder mehreren vorgegebenen Schwellenwerten verglichen werden, und das Ergebnis des Vergleichs angezeigt und/oder verwendet wird, um die Trennungsbedingungen, die während der kontinuierlichen Maischetrennung angewendet werden, zu verstellen und/oder die Maischebildungsbedingungen, die in einer kontinuierlichen Herstellung der Maische angewendet werden, zu verstellen.

10. Verfahren nach Anspruch 8 oder 9, wobei die Messwerte des Brechungsindex mit einem Sollwert verglichen werden, und wobei das Ergebnis des Vergleichs angezeigt und/oder verwendet wird, um Trennungsbedingungen, die während der kontinuierlichen Maischetrennung angewendet werden, zu verstellen, und/oder Maischebildungsbedingungen, die bei kontinuierlichen Herstellung der Maische angewendet werden, zu verstellen.

11. Verfahren nach einem der vorhergehenden Ansprüche, wobei der Malztreber in einen Malztreberbehälter überführt wird, und wobei der Malztreber aus dem Malztreberbehälter entfernt und über das Refraktometer geführt wird, um die Sequenz aus zeitaufgelösten Messwerten des Brechungsindex zu erhalten.

12. Vorrichtung zur Trennung von verzuckerter Maische in klare Stammwürze und Malztreber, wobei die Vorrichtung aufweist:

• eine Fest-Flüssig-Trenneinrichtung mit einem oder mehreren Separatoren, die ausgewählt sind aus: Filter, Zentrifugen, Dekanter, Pressen und Kombinationen davon, wobei die Fest-Flüssig-Trennvorrichtung einen Einlass für verzuckerte Maische, einen Auslass für klare Stammwürze und einen Auslass für Malztreber hat; und
• ein prozessinternes Refraktometer, das in dem Auslass für Malztreber oder nachgeordnet zu dem Auslass für Malztreber angeordnet ist.

13. Vorrichtung nach Anspruch 12, wobei die Vorrichtung einen prozessinternen Temperatursensor enthält, der in dem Auslass für Malztreber oder nachgeordnet zu dem Auslass für Malztreber angeordnet ist.

14. Vorrichtung nach Anspruch 12 oder 13, wobei die Vorrichtung einen Malztreberbehälter enthält, der mit dem Auslass für Malztreber verbunden ist, wobei der Malztreberbehälter einen Auslass für Malztreber und einen Schneckenförderer zum Entfernen von Malztreber aus dem Malztreberbehälter durch den Auslass für Malztreber aufweist.

15. Vorrichtung nach einem der Ansprüche 12 - 14, wobei die Fest-Flüssig-Trenneinrichtung ausgewählt ist aus: einem Läuterbottich, einem Maischefilter und einer Dekanter-Zentrifuge.

**Revendications**

1. Méthode de surveillance de la teneur en extrait de drêches dans un processus de brassage, ladite méthode comprenant :

• séparer une maische saccharifiée en moût limpide et en drêches ; et
• transporter un flux des drêches à travers un réfractomètre pour obtenir une séquence de mesures d'indice de réfraction à résolution temporelle.

2. Méthode selon la revendication 1, dans laquelle le réfractomètre génère la séquence de mesures d'indice de réfraction avec une fréquence d'au moins 0,1 s$^{-1}$, de préférence avec une fréquence d'au moins 0,2 s$^{-1}$.

3. Méthode selon l'une quelconque des revendications précédentes, dans laquelle le flux des drêches est également transporté à travers un capteur de température pour générer une séquence de mesures de température à résolution temporelle.

4. Méthode selon la revendication 3, dans laquelle le capteur de température génère la séquence de mesures de température avec une fréquence d'au moins 0,01 s$^{-1}$, de préférence avec une fréquence d'au moins 0,05 s$^{-1}$.

5. Méthode selon l'une quelconque des revendications précédentes, dans laquelle la méthode comprend :

   • séparer la maische saccharifiée en moût limpide et en drêches ;
   • retirer un volume de drêches ;

   dans laquelle le volume de drêches est transporté à travers un réfractomètre sous la forme d'un flux de drêches pour obtenir la séquence de mesures d'indice de réfraction à résolution temporelle, et dans laquelle la teneur en extrait du volume de drêches est déterminée en utilisant ladite séquence de mesures d'indice de réfraction.

6. Méthode selon les revendications 3 et 5, dans laquelle la teneur en extrait du volume de drêches est déterminée en utilisant la séquence de mesures d'indice de réfraction et la séquence de mesures de température.

7. Méthode selon la revendication 5 ou 6, dans laquelle la teneur en extrait du volume de drêches est déterminée en tenant compte de fluctuations du débit d'écoulement du flux de drêches.

8. Méthode selon l'une quelconque des revendications 1 à 4, dans laquelle la méthode comprend la séparation en continu de la maische saccharifiée en un flux de moût limpide et un flux de drêches ; dans laquelle au moins une fraction du flux de drêches est transportée en continu à travers un réfractomètre pour obtenir la séquence de mesures d'indice de réfraction à résolution temporelle.

9. Méthode selon la revendication 8, dans laquelle les mesures d'indice de réfraction sont comparées à une ou plusieurs valeurs de seuil prédéterminées et le résultat de la comparaison est affiché et/ou est utilisé pour ajuster les conditions de séparation utilisées lors de la séparation continue de la maische et/ou pour ajuster des conditions d'empâtage utilisées dans une préparation continue de la maische.

10. Méthode selon la revendication 8 ou 9, dans laquelle les mesures d'indice de réfraction sont comparées à une valeur cible et dans laquelle le résultat de la comparaison est affiché et/ou est utilisé pour ajuster des conditions de séparation utilisées lors de la séparation continue de la maische et/ou pour ajuster des conditions d'empâtage utilisées dans une préparation continue de la maische.

11. Méthode selon l'une quelconque des revendications précédentes, dans laquelle les drêches sont transférées dans un réservoir de drêches, et dans laquelle les drêches sont retirées du réservoir de drêches et transportées à travers le réfractomètre pour obtenir la séquence de mesures d'indice de réfraction à résolution temporelle.

12. Appareil pour séparer de la maische saccharifiée en moût limpide et en drêches, ledit appareil comprenant :

   • un dispositif de séparation solide-liquide comprenant un ou plusieurs séparateurs choisis parmi des filtres, des centrifugeuses, des décanteurs, des presses et des combinaisons de ceux-ci, ledit dispositif de séparation solide-liquide ayant une entrée pour la maische saccharifiée ; une sortie pour le moût limpide ; et une sortie pour les drêches ; et
   • un réfractomètre en ligne disposé dans la sortie pour des drêches ou en aval de ladite sortie de drêches.

13. Appareil selon la revendication 12, dans laquelle l'appareil contient un capteur de température en ligne disposé dans la sortie des drêches ou en aval de ladite sortie de drêches.

14. Appareil selon l'une quelconque des revendications 12 ou 13, dans laquelle l'appareil contient un réservoir de drêches qui est connecté à la sortie pour des drêches, ledit réservoir de drêches comprenant une sortie pour des drêches et un transporteur à vis pour retirer des drêches à partir dudit réservoir de drêches à travers la sortie pour des drêches.

15. Dispositif selon l'une quelconque des revendications 12 à 14, dans laquelle le dispositif de séparation solide-liquide est choisi parmi une cuve de clarification, un filtre à maische et un décanteur centrifuge.

# Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 1329563

- WO 2005027665 A

**Non-patent literature cited in the description**

- **KU, H. H.** Notes on the use of propagation of error formulas. Precision Measurement and Calibration. *NBS SP 3D0,* 1969, vol. 1, 331-341